# EUROPEAN PATENT APPLICATION

(11) **EP 4 607 859 A1**
(43) Date of publication of application: **27.08.2025**
(21) Application number: 23878913.5
(22) Date of filing: 22.09.2023
(51) Int. Cl.: H04L 12/40, H04L 12/46, H04L 12/42

(54) **TOPOLOGICAL NETWORK, AND DYNAMIC ADDRESS INITIALIZATION METHOD**

(30) Priority: 20.10.2022 CN 202211287899
(71) Applicant: 3peak Inc., Suzhou, Jiangsu 215000 (CN)
(72) Inventor: ZHAO, Yingchun, Suzhou, Jiangsu 215000 (CN); SONG, Hongdong, Suzhou, Jiangsu 215000 (CN); ZHAO, Yiming, Suzhou, Jiangsu 215000 (CN); ZHANG, Lin, Suzhou, Jiangsu 215000 (CN)
(74) Representative: Winter, Brandl - Partnerschaft mbB
(86) International application number: PCT/CN2023/120745
(87) International publication number: WO 2024/082920

(57) **Abstract**

This application provides a topology network and a dynamic address initialization method. The master node device and the slave node device send an initialization request frame by using a downstream port after being powered on; when obtaining a feedback result of the initialization request frame, the slave node device determines a dynamic address of the slave node device based on the feedback result; the slave node device generates a corresponding initialization response acknowledgment frame based on the dynamic address of the slave node device, and transmits the generated initialization response acknowledgment frame to an upstream device by using an upstream port; and after receiving an initialization response acknowledgment frame of a corresponding downstream device, the master node device determines a quantity of node devices in the topology network and a dynamic address of each node device based on a dynamic address of the downstream device. Therefore, a total quantity of slave node devices on a bus and device addresses of the slave node devices can be quickly and stably inferred, thereby shortening an initialization time. Because a dynamic address allocation manner is used, a problem that system initialization fails due to a static address conflict caused by node addition or deletion can be further resolved.

## Description

### TECHNICAL FIELD

This application relates to the field of communication technologies, and specifically, to a topology network and a dynamic address initialization method.

### BACKGROUND

With the development of society, the types of electronic components become increasingly more diverse. In many scenarios, a single electronic component cannot meet requirements of a user. In this case, it is necessary to combine a plurality of electronic components into a topology network, and the plurality of electronic components work together under coordination of the topology network. An automotive audio network (AAN, Automotive Audio Network) in a topology network is used as an example. The automotive audio network is a serial communication network used to interconnect automotive audio devices, and is a topology network connecting automotive electronic components such as a head unit (Head Unit), a digital microphone, a radio, a power amplifier (PA), and an emergency call (E-Call/Telematics) module in series.

A topology structure of the automotive audio network is not fixed. A master node device and a slave node device in the automotive audio network change with a status of an automotive component. It is required that a multi-node automotive audio network can flexibly cope with such changes of node quantities and device addresses, thereby ensuring that a total quantity of slave nodes on a bus and device addresses of the slave nodes can be accurately inferred from a distributed multi-node automotive audio network. This has become a difficult problem that a person skilled in the art continues to pay attention to.

Information disclosed in this background section is only for the purpose of increasing understanding of the general background of the present invention, and should not be regarded as an acknowledgment or any form of suggestion that the information constitutes the conventional technology already known to a person of ordinary skill in the art.

### SUMMARY

An objective of this application is to provide a topology network and a dynamic address initialization method, to at least partially improve the foregoing problem.

To achieve the above objective, the following technical solutions are used in embodiments of this application:
According to a first aspect, an embodiment of this application provides a topology network, and the topology network comprises a master node device and at least one slave node device, and the master node device and the at least one slave node device are connected in sequence;
the master node device and the slave node device are configured to send an initialization request frame by using a downstream port after being powered on;
the slave node device is configured to: when obtaining a feedback result of the initialization request frame, determine a dynamic address of the slave node device based on the feedback result, wherein
the feedback result comprises a response timeout of a downstream port, floating of a downstream port, or an initialization response acknowledgment frame of a downstream device, and the initialization response acknowledgment frame of the downstream device comprises a dynamic address of the downstream device;
the slave node device is further configured to generate a corresponding initialization response acknowledgment frame based on the dynamic address of the slave node device, and transmit the generated initialization response acknowledgment frame to an upstream device by using an upstream port; and
the master node device is further configured to: after receiving an initialization response acknowledgment frame of a corresponding downstream device, determine a quantity of node devices in the topology network and a dynamic address of each node device based on a dynamic address of the downstream device.

Optionally, the slave node device is deployed with a port status detection circuit, and the slave node device is further configured to: after being powered on, determine, by using the port status detection circuit, whether a downstream port of the slave node device is floated.

Optionally, the slave node device is further configured to: after the initialization request frame is sent by using the downstream port, if an initialization response frame of a corresponding downstream device is not received within first preset duration, determine that a response of the downstream port times out, wherein
the initialization response frame comprises an initialization response waiting frame or an initialization response acknowledgment frame.

Optionally, the master node device and the slave node device are further configured to: after receiving an initialization request frame transmitted by an upstream device, feed back an initialization response waiting frame to the corresponding upstream device at an interval of second preset duration, until a generated initialization response acknowledgment frame is transmitted to the upstream device by using an upstream port.

Optionally, either of the master node device and the slave node device is deployed with a response timer, and the response timer is used for timing.

Optionally, the topology network is a serial topology network, a downstream port of the master node device is connected to an upstream port of a first slave node device, an upstream port of an ith slave node device is connected to a downstream port of an (i-1)th slave node device, and a downstream port of an nth slave node device is floated, wherein 2≤i≤n, and n is a quantity of the slave node devices.

Optionally, the topology network is a ring topology network, a downstream port of the master node device is connected to an upstream port of a first slave node device, an upstream port of an ith slave node device is connected to a downstream port of an (i-1)th slave node device, and a downstream port of an nth slave node device is connected to an upstream port of the master node device, wherein 2≤i≤n, and n is a quantity of the slave node devices.

According to a second aspect, an embodiment of this application provides a dynamic address initialization method for a topology network, applied to the foregoing topology network, and the method comprises:
The master node device and the slave node device send an initialization request frame by using a downstream port after being powered on;
when obtaining a feedback result of the initialization request frame, the slave node device determines a dynamic address of the slave node device based on the feedback result, wherein
the feedback result comprises floating information of a downstream port or an initialization response acknowledgment frame of a downstream device, and the initialization response acknowledgment frame of the downstream device comprises a dynamic address of the downstream device;
the slave node device generates a corresponding initialization response acknowledgment frame based on the dynamic address of the slave node device, and transmits the generated initialization response acknowledgment frame to an upstream device by using an upstream port; and
after receiving an initialization response acknowledgment frame of a corresponding downstream device, the master node device determines a quantity of node devices in the topology network and a dynamic address of each node device based on a dynamic address of the downstream device.

Optionally, the slave node device is deployed with a port status detection circuit, and the method further comprises:
After being powered on, the slave node device determines, by using the port status detection circuit, whether a downstream port of the slave node device is floated.

Optionally, the method further comprises:
After the initialization request frame is sent by using the downstream port, if an initialization response frame of a corresponding downstream device is not received within first preset duration, the slave node device determines that a response of the downstream port times out, wherein
the initialization response frame comprises an initialization response waiting frame or an initialization response acknowledgment frame.

**In** comparison with the conventional technology, the embodiments of this application provide the topology network and the dynamic address initialization method. The topology network comprises a master node device and at least one slave node device, wherein the master node device and the at least one slave node device are connected in sequence; the master node device and the slave node device are configured to send an initialization request frame by using a downstream port after being powered on; the slave node device is configured to: when obtaining a feedback result of the initialization request frame, determine a dynamic address of the slave node device based on the feedback result; the slave node device is further configured to generate a corresponding initialization response acknowledgment frame based on the dynamic address of the slave node device, and transmit the generated initialization response acknowledgment frame to an upstream device by using an upstream port; and the master node device is further configured to: after receiving an initialization response acknowledgment frame of a corresponding downstream device, determine a quantity of node devices in the topology network and a dynamic address of each node device based on a dynamic address of the downstream device. After being powered on, each node device directly notifies the downstream device to perform initialization acknowledgment, and does not need to wait for a broadcast packet of the master node device, so that a total quantity of slave node devices on a bus and device addresses of the slave node devices can be quickly and stably inferred, thereby shortening an initialization time. Because a dynamic address allocation manner is used, a problem that system initialization fails due to a static address conflict caused by node addition or deletion can be further resolved.

To make the above objectives, features, and advantages of this application more understandable, the following is described in detail by using exemplary embodiments with reference to the accompanying drawings.

**In** comparison with the conventional technology, the gas collection ring for gallium oxide epitaxy according to the implementations of the present invention allows, through the arrangement of the inner chamber of the gas collection ring and the airflow holes on the inner surface and the outer surface, the reaction gas to flow passing through the first airflow hole on the inner surface of the gas collection ring into the inner chamber of the gas collection ring, and then to be discharged from the second airflow hole under the outer surface of the gas collection ring, which not only reduces the amount of gas inside the installation cavity at which the carrier plate is located, but also allows the gas to evenly flow out of the installation cavity and the reaction chamber, while reducing the contact deposition between the reaction gas and the inner wall of the reaction chamber, and reducing the number of cleaning of the reaction chamber.

The gas collection ring for gallium oxide epitaxy according to the implementations of the present invention can effectively prevent the gallium oxide epitaxy from being oxidized by oxygen by depositing an anti-oxidation coating, and prolong the service life.

In the MOCVD equipment for gallium oxide epitaxy according to the implementations of the present invention, by adjusting the gas collection ring suitable for the inner diameter and matching the carrier plate with a suitable size, the amount of reaction gas flowing into the lower space of the carrier plate is reduced, so that more reaction gas can flow out of the second airflow hole under the gas collection ring, prolonging the life span of the internal metal parts and heating components.

In the MOCVD equipment for gallium oxide epitaxy in the implementations of the present invention, by depositing an anti-oxidation coating on the surface of the internal parts, by changing the material of the heating wire, and using an anti-oxidation material, it can further prevent the heating wire from being oxidized by the incoming oxygen.

### BRIEF DESCRIPTION OF DRAWINGS

To describe the technical solutions in embodiments of this application more clearly, the following briefly describes the accompanying drawings that need to be used in the embodiments. It should be understood that, the accompanying drawings below only show some embodiments of this application, and thus should not be considered as limitations on the scope. A person of ordinary skill in the art may still derive other related accompanying drawings from the accompanying drawings without creative efforts.
FIG. 1 is a schematic diagram of a topology structure of an automotive audio network according to an embodiment of this application;
FIG. 2 is a schematic structural diagram of a serial topology network according to an embodiment of this application;
FIG. 3 is a schematic structural diagram of a ring topology network according to an embodiment of this application;
FIG. 4 is a schematic diagram of an initialization process according to an embodiment of this application; and
FIG. 5 is a schematic flowchart of a dynamic address initialization method for a topology network according to an embodiment of this application.

In the figures: 11-master node device; 12-slave node device.

### DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. Clearly, the described embodiments are some rather than all of embodiments of this application. Generally, components of embodiments of this application described and shown in the accompanying drawings herein may be arranged and designed in various manners.

Therefore, the following detailed description of the embodiments of this application in the accompanying drawings is not intended to limit the protection scope of this application, but merely indicates selected embodiments of this application. All other embodiments obtained by a person of ordinary skill in the art based on the embodiments of this application without creative efforts shall fall within the protection scope of this application.

It should be noted that similar reference signs and letters indicate similar items in the accompanying drawings below. Therefore, once an item is defined in one accompanying drawing, it does not need to be further defined and described in subsequent accompanying drawings. In addition, the terms "first", "second", and the like in the description of this application are merely used for the purpose of distinguishing description, and cannot be understood as indicating or implying relative importance.

It should be noted that the relational terms such as first and second in this specification are used only to differentiate an entity or operation from another entity or operation, and do not require or imply any actual relationship or sequence between these entities or operations. In addition, the term "comprise", "contain", or any other variant thereof is intended to cover non-exclusive inclusion, so that a process, method, article, or device that comprises a series of elements comprises not only those elements but also other elements that are not expressly listed, or comprises elements inherent to such a process, method, article, or device. Without more limitations, an element defined by the phrasing "comprising a..." does not preclude the existence of other identical elements in the process, method, article, or device that comprises the element.

**In** the description of this application, it should be noted that orientations or location relationships indicated by terms "up", "down", "inside", "outside", and the like are orientation or location relationships shown in the accompanying drawings, or the usual orientation or location relationships of the products of this application when in use. These terms are only used to facilitate description of this application and simplify the description, but not to indicate or imply that the mentioned apparatus or elements must have a specific orientation or must be established and operated in a specific orientation, and thus these terms cannot be understood as a limitation to this application.

**In** the description of this application, it should be further noted that, unless otherwise specified and defined explicitly, the terms "arrangement" and "connection" should be understood broadly. For example, a connection may be a fixed connection, a removable connection, or an integral connection; may be a mechanical connection or an electrical connection; may be a direct connection or an indirect connection via an intermediate medium; or may be an internal connection between two elements. A person of ordinary skill in the art can understand specific meanings of these terms in this application based on specific situations.

Some implementations of this application are described below in detail with reference to the accompanying drawings. The following embodiments and features in the embodiments may be combined, provided that no conflict occurs.

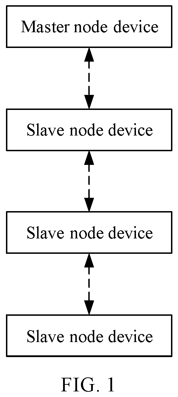

Refer to FIG. 1. FIG. 1 is a schematic diagram of a topology structure of an automotive audio network according to an embodiment of this application. It should be understood that a topology structure of the automotive audio network is not fixed. A master node device and a slave node device in the automotive audio network change with a status of an automotive component. It is required that a multi-node automotive audio network can flexibly cope with such changes of node quantities and device addresses, thereby ensuring that a total quantity of slave nodes on a bus and device addresses of the slave nodes can be accurately inferred from a distributed multi-node automotive audio network.

A conventional method is as follows: The master node device sequentially sends a command to slave node devices by using a serial line in a broadcast manner. After receiving the broadcast command, the slave nodes sequentially send static device addresses of the slave node devices to the master node device, thereby ensuring that the master node device can infer a total quantity of the slave node devices connected to a bus and device addresses of the slave node devices. However, in this manner, if there is an extremely large quantity of slave node devices, it takes an extremely long time for an end slave node device to receive the broadcast command sent out by the master node device, and it takes an extremely long time for the end slave node device to transfer a device address of the end slave node device to the master node device. Consequently, the entire system needs to spend more time for initialization. In addition, when an address of the slave node device is a static address, it is easy to generate a node identification conflict due to an increase of node devices, namely, a conflict of a static address corresponding to the node device, which requires an additional software overhead to ensure that the entire audio system can be correctly initialized.

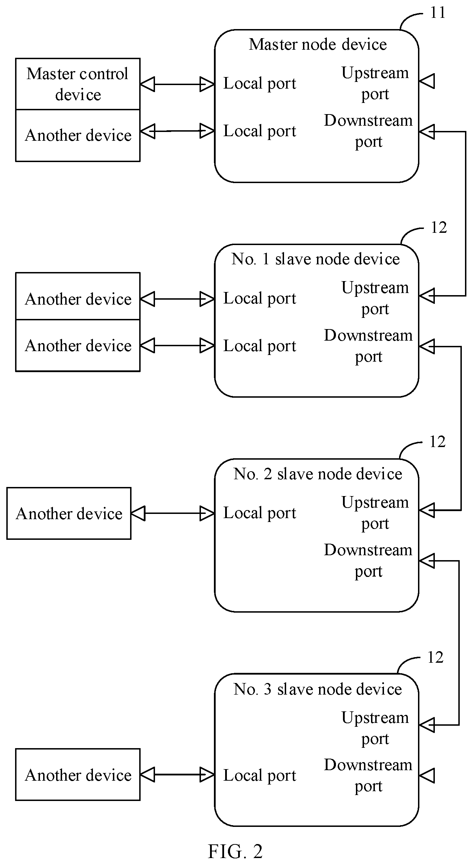

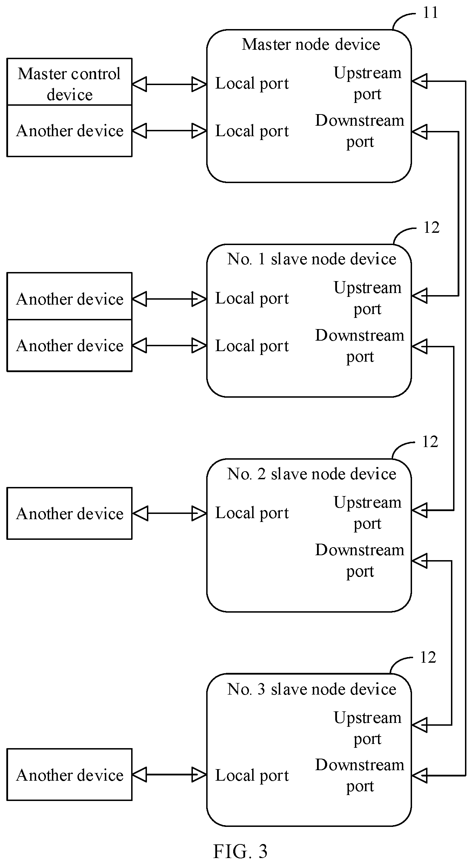

To overcome the foregoing problem, an embodiment of this application provides a topology network. Refer to FIG. 2 and FIG. 3. FIG. 2 is a schematic structural diagram of a serial topology network according to an embodiment of this application. FIG. 3 is a schematic structural diagram of a ring topology network according to an embodiment of this application.

As shown in FIG. 2 and FIG. 3, the topology network comprises a master node device 11 and at least one slave node device 12, and the master node device 11 and the at least one slave node device 12 are connected in sequence.

Optionally, as shown in FIG. 2, the topology network is a serial topology network, a downstream port of the master node device 11 is connected to an upstream port of a first slave node device 12 (namely, a No. 1 slave node device in FIG. 2), an upstream port of an ith slave node device 12 is connected to a downstream port of an (i-1)th slave node device 12, and a downstream port of an nth slave node device 12 (namely, a No. 3 slave node device in FIG. 2) is floated, wherein 2≤i≤n, and n is a quantity of slave node devices.

Optionally, as shown in FIG. 3, the topology network is a ring topology network, a downstream port of the master node device 11 is connected to an upstream port of a first slave node device 12 (namely, a No. 1 slave node device in FIG. 3), an upstream port of an ith slave node device 12 is connected to a downstream port of an (i-1)th slave node device 12, and a downstream port of an nth slave node device 12 (namely, a No. 3 slave node device in FIG. 3) is connected to an upstream port of the master node device 11, wherein 2≤i≤n, and n is a quantity of slave node devices.

It should be noted that in FIG. 2 and FIG. 3, n=3 is used as an example for description, but not as a limitation.

It should be understood that the topology network shown in FIG. 2 and FIG. 3 may be but is not limited to an automotive audio network. When the topology network is an automotive audio network, other devices connected to the slave node device 12 by using a local port may be but are not limited to a digital microphone, a radio, a power amplifier (PA), and an emergency call (E-Call/Telematics). A master control device connected to the master node device 11 by using a local port may be but is not limited to a head unit (Head Unit).

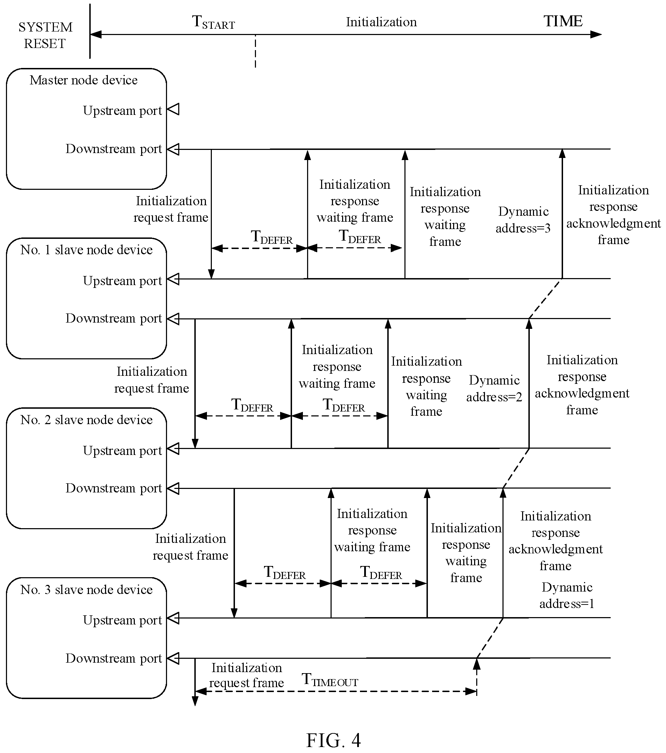

When the topology network provided in this embodiment of this application is initialized, it is ensured that the master node device in the topology network can quickly and stably infer a total quantity of slave node devices on a bus and device addresses of the slave node devices. This shortens an initialization time, and can further resolve a problem that system initialization fails due to a static address conflict caused by node addition or deletion. Specifically, refer to FIG. 4. FIG. 4 is a schematic diagram of an initialization process according to an embodiment of this application.

The master node device 11 and the slave node device 12 are configured to send an initialization request frame by using a downstream port after being powered on.

It should be understood that, after being powered on, any node device in the topology network sends a control frame comprising initialization information, namely, the initialization request frame, by using a downstream port of the any node device. All node devices on the bus need to send out the initialization request frame within a TSTART time after a system is powered on, and be ready to respond to an initialization response frame. The initialization response frame comprises an initialization response waiting frame and an initialization response acknowledgment frame.

Refer to Table 1 below and Table 2 below. Table 1 below shows a possible structure of an initialization request frame.

**Table 1**

| 0~7 | 8~12 | 13-15 | 16-20 | 21-25 |
|---|---|---|---|---|
| Preamble | Sequence number | Frame mode | Source address | Destination address |
| Preamble | 0xX | 000 | 0000 | 0000 |

**Continued from Table 1**

| 26-27 | 28-31 | 32-39 | 40-47 | 48-51 |
|---|---|---|---|---|
| Command | Load byte length | Load byte 0 | CRC | Terminator |
| 00 | 0x0 | 0x00 | 0xXX | Terminator |

Table 2 below is a structural description of the initialization request frame shown in Table 1.

**Table 2**

| **Initialization request** | | |
|---|---|---|
| **Name** | **Assignment** | **Description** |
| Preamble | Preamble | Preamble in a fixed format. |
| Sequence number | 0xX | Sequence number. Initial values of sequence numbers are not all zero. |
| Frame mode | 000 | Control frame. |
| Source address | 0000 | During an initialization operation, a dynamic address is not allocated. At this time, assignments of the source address and the destination address are meaningless. |
| Destination address | 0000 | |
| Command | 00 | Initialization operation. |
| Load byte length | 0x0 | The load byte length is 0, and there is only one load byte. |
| Load byte 0 | Ox00 | Fixed value 0x00 |
| CRC check | 0xXX | Depends on an initial value of a linear shift register. |
| Terminator | Terminator | Terminator in a fixed format. |

The slave node device 12 is further configured to: when obtaining a feedback result of the initialization request frame, determine a dynamic address of the slave node device 12 based on the feedback result.

The feedback result comprises a response timeout of a downstream port, floating of a downstream port, or an initialization response acknowledgment frame of a downstream device, and the initialization response acknowledgment frame of the downstream device comprises a dynamic address of the downstream device.

Optionally, a downstream device is another node device connected to a downstream port of a node device; and an upstream device is another node device connected to an upstream port of a node device. For example, a downstream device of the master node device 11 is a No. 1 slave node device 12, and the No. 1 slave node device 12 is an upstream device of a No. 2 slave node device.

It should be noted that if it may be determined that a downstream port of the slave node device 12 is floated before the initialization request frame is sent by using the downstream port, the slave node device 12 does not need to send the initialization request frame to the downstream port, and may directly determine a dynamic address of the slave node device 12.

Optionally, referring to FIG. 2, a downstream port of a No. 3 slave node device 12 in FIG. 2 is floated. In this case, the No. 3 slave node device 12 may determine a dynamic address corresponding to the No. 3 slave node device 12 as a first agreed address, for example but not limited to the first agreed address=1.

In an optional implementation, a downstream port of a No. 3 slave node device 12 is connected to an upstream port of a No. 4 slave node device 12. The No. 3 slave node device 12 sends an initialization request frame to the downstream port after being powered on, and does not receive any initialization response frame of the No. 4 slave node device 12 within a time of first preset duration (T_{TIMEOUT}). In this case, the No. 3 slave node device 12 determines that a response of the downstream port times out, and may determine a dynamic address corresponding to the No. 3 slave node device 12 as a first agreed address, for example but not limited to the first agreed address=1.

Optionally, referring to FIG. 3, a downstream port of a No. 3 slave node device 12 in FIG. 3 is connected to an upstream port of the master node device 11, that is, the master node device 11 is a downstream device of the No. 3 slave node device 12. A dynamic address of the master node device 11 is a second agreed address, for example but not limited to the second agreed address=0. When the master node device 11 obtains an initialization request frame transmitted by the No. 3 slave node device 12, the master node device 11 feeds back an initialization response acknowledgment frame corresponding to the master node device 11 to the No. 3 slave node device 12 by using an upstream port of the master node device 11. The initialization response acknowledgment frame fed back by the master node device 11 comprises the second agreed address corresponding to the master node device 11. When obtaining the initialization response acknowledgment frame comprising the second agreed address, the No. 3 slave node device 12 may determine that a dynamic address corresponding to the No. 3 slave node device 12 is a first agreed address, for example but not limited to the first agreed address=1.

Referring to FIG. 4, it is assumed that a dynamic address in an initialization response acknowledgment frame fed back by the No. 3 slave node device 12 to a No. 2 slave node device 12 is 1. In this case, the No. 2 slave node device 12 parses the received initialization response acknowledgment frame to determine that a dynamic address of a downstream device of the No. 2 slave node device 12 is 1, and the No. 2 slave node device 12 may perform adjustment according to a preset change rule on a basis of the dynamic address=1, to obtain a dynamic address of the No. 2 slave node device 12, for example, the dynamic address of the No. 2 slave node device 12 is 2. Similarly, after obtaining an initialization response acknowledgment frame fed back by a downstream device, another slave node device 12 may determine a dynamic address of the another slave node device 12.

It should be noted that the preset change rule may be but is not limited to +1, +2, +3, or the like, or may be a letter combination jump rule. This is not limited herein.

The slave node device 12 is further configured to generate a corresponding initialization response acknowledgment frame based on the dynamic address of the slave node device 12, and transmit the generated initialization response acknowledgment frame to an upstream device by using an upstream port.

It should be understood that the slave node device 12 feeds back the initialization response acknowledgment frame in a layer-by-layer manner, and finally, the downstream device of the master node device 11 (for example, the No. 1 slave node device 12) feeds back the initialization response acknowledgment frame to the master node device 11.

The master node device 11 is further configured to: after receiving an initialization response acknowledgment frame of a corresponding downstream device, determine a quantity of node devices in the topology network and a dynamic address of each node device based on a dynamic address of the downstream device.

It should be understood that each node device sends only a dynamic address of a current node device to an upstream port. After the master node device 11 determines the quantity of the node devices in the topology network and the dynamic address of each node device, it indicates that the initialization operation of the topology network ends. In the solution of this application, after being powered on, each node device directly notifies the downstream device to perform initialization acknowledgment, and does not need to wait for a broadcast packet of the master node device 11, so that a total quantity of slave node devices on the bus and device addresses of the slave node devices can be quickly and stably inferred, thereby shortening an initialization time. Because a dynamic address allocation manner is used, a problem that system initialization fails due to a static address conflict caused by node addition or deletion can be further resolved.

Optionally, refer to Table 3 below and Table 4 below. Table 3 below shows a possible structure of an initialization response acknowledgment frame.

**Table 3**

| 0~7 | 8~12 | 13-15 | 16-20 | 21-25 |
|---|---|---|---|---|
| Preamble | Sequence number | Frame mode | Source address | Destination address |
| Preamble | 0xX | 000 | 0000 | 0000 |

**Continued from Table 3**

| 26-27 | 28-31 | 32-39 | 40-47 | 48-51 |
|---|---|---|---|---|
| Command | Load byte length | Load byte 0 | CRC | Terminator |
| 00 | 0x0 | 0xA2 | 0xXX | Terminator |

Table 4 below shows a structural description of the initialization response acknowledgment frame shown in Table 3.

**Table 4**

| **Initialization response-acknowledgment, dynamic address=2** | | |
|---|---|---|
| **Name** | **Assignment** | **Description** |
| Preamble | Preamble | Preamble in a fixed format. |
| Sequence number | 0xX | Sequence number. Initial values of sequence numbers are not all zero. |
| Frame mode | 000 | Control frame |
| Source address | 00000 | During an initialization operation, a dynamic address is not allocated. At this time, assignments of the source address and the destination address are meaningless. |
| Destination address | 00000 | |
| Command | 00 | Initialization operation. |
| Load byte length | 0x0 | The load byte length is 0, and there is only one load byte. |
| Load byte 0 | 0xA2 | In response to an initialization request, a current node device initiates an acknowledgment response, and sends a dynamic address of the current node device. |
| | | Bit 7:5=101, the acknowledgment response; and bit 4:0=2, the dynamic address of the current node device. |
| CRC check | 0xXX | Depends on an initial value of a linear shift register. |
| Terminator | Terminator | Terminator in a fixed format. |

In an optional implementation, the slave node device 12 is deployed with a port status detection circuit, and the slave node device 12 is further configured to: after being powered on, determine, by using the port status detection circuit, whether a downstream port of the slave node device 12 is floated.

It should be noted that when determining that the downstream port of the slave node device 12 is floated, the slave node device 12 does not need to continue to wait for the downstream port to feed back an initialization response frame, and directly determines the dynamic address of the slave node device 12, and feeds back an initialization response acknowledgment frame to the upstream device, thereby further reducing initialization duration.

In an optional implementation, either of the master node device 11 and the slave node device 12 is deployed with a response timer, and the response timer is used for timing.

In an optional implementation, the slave node device 12 is further configured to: after the initialization request frame is sent by using the downstream port, if an initialization response frame of a corresponding downstream device is not received within first preset duration, determine that a response of the downstream port times out, wherein
the initialization response frame comprises an initialization response waiting frame or an initialization response acknowledgment frame.

For example, after waiting for the first preset duration (T_{TIMEOUT}), the No. 3 slave node device 12 in FIG. 4 still does not receive an initialization response waiting frame or an initialization response acknowledgment frame. In this case, the No. 3 slave node device 12 may determine that a response of the downstream port times out, and may determine that a dynamic address corresponding to the No. 3 slave node device 12 is a first agreed address.

Optionally, after sending the initialization request frame by using the downstream port, the slave node device 12 starts a local response timer of the slave node device 12, and starts timing. If any initialization response frame is not received when timing of the response timer exceeds the first preset duration, it is determined that the response of the downstream port times out. If receiving, within the first preset duration, an initialization response waiting frame fed back by the downstream device, the slave node device 12 resets the local response timer of the slave node device 12, and restarts timing. If receiving, within the first preset duration, an initialization response acknowledgment frame fed back by the downstream device, the slave node device 12 may stop timing, and obtain the dynamic address of the downstream device based on the initialization response acknowledgment frame fed back by the downstream device.

To avoid a case in which timeout occurs in the downstream device and the upstream device, an embodiment of this application further provides an optional implementation. For details, refer to FIG. 4.

The master node device 11 and the slave node device 12 are further configured to: after receiving an initialization request frame transmitted by an upstream device, feed back an initialization response waiting frame to the corresponding upstream device at an interval of second preset duration (T_{DEFER}), until a generated initialization response acknowledgment frame is transmitted to the upstream device by using an upstream port.

As shown in FIG. 4, after receiving an initialization request frame and before feeding back an initialization response acknowledgment frame, the No. 2 slave node device 12 and the No. 1 slave node device 12 each feed back an initialization response waiting frame to a corresponding upstream device at an interval of second preset duration (T_{DEFER}), to prevent the upstream device from determining that a response of a downstream port of the upstream device times out.

Optionally, after receiving an initialization request frame from an upstream port of a node device, the node device starts a local response timer. When the response timer reaches second preset duration (T_{DEFER}) of response timing, and the node device does not receive an initialization response acknowledgment frame from a downstream port, the node device sends out an initialization response waiting frame by using the upstream port.

Optionally, refer to Table 5 below and Table 6 below. Table 5 below shows a possible structure of an initialization response acknowledgment frame.

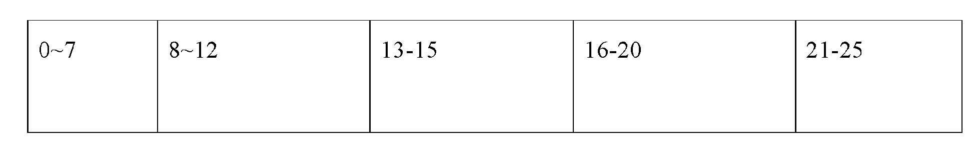

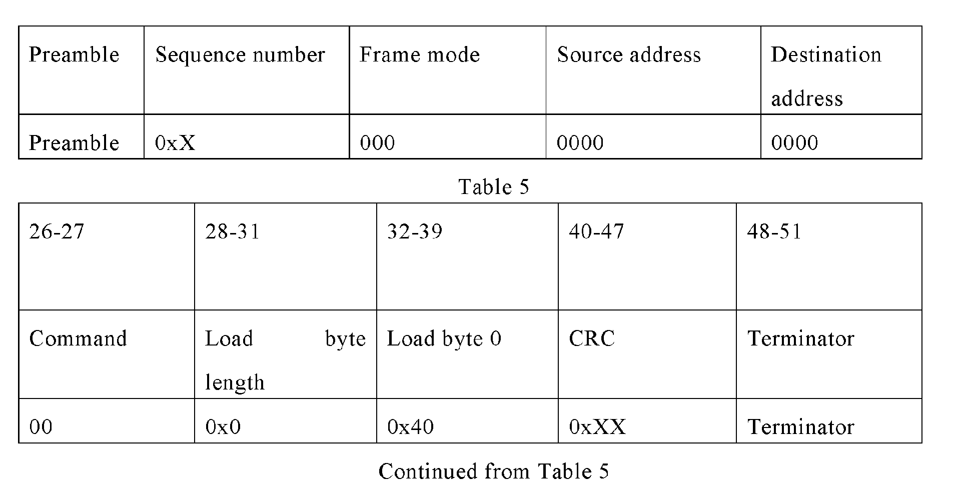

Table 6 below shows a structural description of the initialization response waiting frame shown in Table 5.

**Table 6**

| **Initialization response waiting frame** | | |
|---|---|---|
| **Name** | **Assignment** | **Description** |
| Preamble | Preamble | Preamble in a fixed format. |
| Sequence number | 0xX | Sequence number. Initial values of sequence numbers are not all zero. |
| Frame mode | 000 | Control frame. |
| Source address | 0000 | During an initialization operation, a dynamic address is not allocated. At this time, assignments of the source address and the destination address are meaningless. |
| Destination address | 00000 | |
| Command | 00 | Initialization operation. |
| Load byte length | 0x0 | The load byte length is 0, and there is only one load byte. |
| Load byte 0 | 0x40 | In response to an initialization request, a current node device does not receive a downstream acknowledgment response or does not find that an operation times out. If Bit 7:5=010, wait for a response. |
| CRC check | 0xXX | Depends on an initial value of a linear shift register. |
| Terminator | Terminator | Terminator in a fixed format. |

It should be noted that, in the solution of this application, the dynamic address of the master node device 11 may be fixed as the second agreed address, for example but not limited to 0.

In conclusion, this embodiment of this application provides the topology network, comprising a master node device and at least one slave node device, wherein the master node device and the at least one slave node device are connected in sequence; the master node device and the slave node device are configured to send an initialization request frame by using a downstream port after being powered on; the slave node device is configured to: when obtaining a feedback result of the initialization request frame, determine a dynamic address of the slave node device based on the feedback result; the slave node device is further configured to generate a corresponding initialization response acknowledgment frame based on the dynamic address of the slave node device, and transmit the generated initialization response acknowledgment frame to an upstream device by using an upstream port; and the master node device is further configured to: after receiving an initialization response acknowledgment frame of a corresponding downstream device, determine a quantity of node devices in the topology network and a dynamic address of each node device based on a dynamic address of the downstream device. After being powered on, each node device directly notifies the downstream device to perform initialization acknowledgment, and does not need to wait for the broadcast packet of the master node device, so that the total quantity of the slave node devices on the bus and the device addresses of the slave node devices can be quickly and stably inferred, thereby shortening an initialization time. Because the dynamic address allocation manner is used, a problem that system initialization fails due to the static address conflict caused by the node addition or deletion can be further resolved.

It should be understood that the structures shown in FIG. 2 and FIG. 3 indicate only schematic structural diagrams of parts of the topology network, and the topology network may further comprise more or fewer components than those shown in FIG. 2 and FIG. 3, or have different configurations from those shown in FIG. 2 and FIG. 3. The components shown in FIG. 2 and FIG. 3 may be implemented by hardware, software, or a combination thereof.

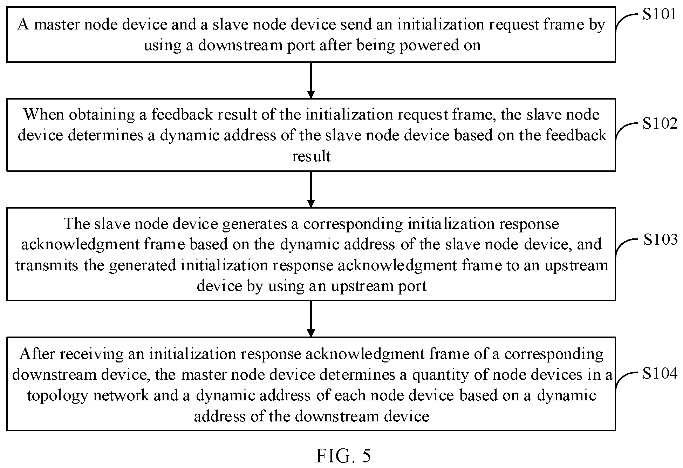

An embodiment of this application provides a dynamic address initialization method for a topology network, which may be applied to, but not limited to, the topology network shown in FIG. 2 and FIG. 3. For a specific process, refer to FIG. 5, the dynamic address initialization method for a topology network comprises S101, S102, S103, and S104. Details are described below.

S101. A master node device and a slave node device send an initialization request frame by using a downstream port after being powered on.

S102. When obtaining a feedback result of the initialization request frame, the slave node device determines a dynamic address of the slave node device based on the feedback result.

The feedback result comprises floating information of a downstream port or an initialization response acknowledgment frame of a downstream device, and the initialization response acknowledgment frame of the downstream device comprises a dynamic address of the downstream device.

S103. The slave node device generates a corresponding initialization response acknowledgment frame based on the dynamic address of the slave node device, and transmits the generated initialization response acknowledgment frame to an upstream device by using an upstream port.

S104. After receiving an initialization response acknowledgment frame of a corresponding downstream device, the master node device determines a quantity of node devices in the topology network and a dynamic address of each node device based on a dynamic address of the downstream device.

In an optional implementation, the slave node device is deployed with a port status detection circuit, and the dynamic address initialization method for a topology network further comprises:
After being powered on, the slave node device determines, by using the port status detection circuit, whether a downstream port of the slave node device is floated.

**In** an optional implementation, the dynamic address initialization method for a topology network further comprises:
After the initialization request frame is sent by using the downstream port, if an initialization response frame of a corresponding downstream device is not received within first preset duration, the slave node device determines that a response of the downstream port times out, wherein
the initialization response frame comprises an initialization response waiting frame or an initialization response acknowledgment frame.

**In** an optional implementation, the dynamic address initialization method for a topology network further comprises:
The master node device and the slave node device are further configured to: after receiving an initialization request frame transmitted by an upstream device, feed back an initialization response waiting frame to the corresponding upstream device at an interval of second preset duration, until a generated initialization response acknowledgment frame is transmitted to the upstream device by using an upstream port.

It should be noted that in the dynamic address initialization method for a topology network provided in this embodiment, the function usage shown in the foregoing topology network embodiment may be executed, to implement a corresponding technical effect. For brief description, for a part not mentioned in this embodiment, reference may be made to corresponding content in the foregoing embodiment.

The foregoing descriptions are merely exemplary embodiments of this application, and are not intended to limit this application. A person skilled in the art may make various modifications and changes to this application. Any modification, equivalent replacement, or improvement made without departing from the spirit and principle of this application shall fall within the protection scope of this application.

It is obvious to a person skilled in the art that this application is not limited to the details of the above exemplary embodiments, and that this application may be implemented in other specific forms without departing from the spirit or basic features of this application. The embodiments should be regarded as exemplary and non-limiting in every respect, and the scope of this application is defined by the appended claims rather than the above description. Therefore, all changes falling within the meaning and scope of equivalent elements of the claims should be comprised in this application. The reference numeral in the claims should not be considered as limiting the involved claims.

## Claims

1. A topology network, wherein the topology network comprises a master node device and at least one slave node device, and the master node device and the at least one slave node device are connected in sequence;
the master node device and the slave node device are configured to send an initialization request frame by using a downstream port after being powered on; and
the slave node device is configured to: when obtaining a feedback result of the initialization request frame, determine a dynamic address of the slave node device based on the feedback result;
wherein the feedback result comprises a response timeout of a downstream port, floating of a downstream port, or an initialization response acknowledgment frame of a downstream device, and the initialization response acknowledgment frame of the downstream device comprises a dynamic address of the downstream device;
the slave node device is further configured to generate a corresponding initialization response acknowledgment frame based on the dynamic address of the slave node device, and transmit the generated initialization response acknowledgment frame to an upstream device by using an upstream port; and
the master node device is further configured to: after receiving an initialization response acknowledgment frame of a corresponding downstream device, determine a quantity of node devices in the topology network and a dynamic address of each node device based on a dynamic address of the downstream device.

2. The topology network according to claim 1, wherein the slave node device is deployed with a port status detection circuit, and the slave node device is further configured to: after being powered on, determine, by using the port status detection circuit, whether a downstream port of the slave node device is floated.

3. The topology network according to claim 1, wherein the slave node device is further configured to: after the initialization request frame is sent by using the downstream port, if an initialization response frame of a corresponding downstream device skips being received within first preset duration, determine that a response of the downstream port times out, wherein
the initialization response frame is an initialization response waiting frame or an initialization response acknowledgment frame.

4. The topology network according to claim 1, wherein the master node device and the slave node device is further configured to: after receiving an initialization request frame transmitted by an upstream device, feed back an initialization response waiting frame to the corresponding upstream device at an interval of second preset duration, until a generated initialization response acknowledgment frame is transmitted to the upstream device by using an upstream port.

5. The topology network according to claim 1, wherein either of the master node device and the slave node device is deployed with a response timer, and the response timer is used for timing.

6. The topology network according to claim 1, wherein the topology network is a serial topology network, a downstream port of the master node device is connected to an upstream port of a first slave node device, an upstream port of an ith slave node device is connected to a downstream port of an (i-1)th slave node device, and a downstream port of an nth slave node device is floated, wherein 2≤i≤n, and n is a quantity of the slave node devices.

7. The topology network according to claim 1, wherein the topology network is a ring topology network, a downstream port of the master node device is connected to an upstream port of a first slave node device, an upstream port of an ith slave node device is connected to a downstream port of an (i-1)th slave node device, and a downstream port of an nth slave node device is connected to an upstream port of the master node device, wherein 2≤i≤n, and n is a quantity of the slave node devices.

8. A dynamic address initialization method for a topology network, wherein the method is applied to the topology network according to any one of claims 1 to 7, and the method comprises:
sending, by the master node device and the slave node device, an initialization request frame by using a downstream port after being powered on; and
when a feedback result of the initialization request frame is obtained, determining, by the slave node device, a dynamic address of the slave node device based on the feedback result;
wherein the feedback result comprises floating information of a downstream port or an initialization response acknowledgment frame of a downstream device, and the initialization response acknowledgment frame of the downstream device comprises a dynamic address of the downstream device;
generating, by the slave node device, a corresponding initialization response acknowledgment frame based on the dynamic address of the slave node device, and transmitting the generated initialization response acknowledgment frame to an upstream device by using an upstream port; and
after an initialization response acknowledgment frame of a corresponding downstream device is received, determining, by the master node device, a quantity of node devices in the topology network and a dynamic address of each node device based on a dynamic address of the downstream device.

9. The dynamic address initialization method for a topology network according to claim 8, wherein the slave node device is deployed with a port status detection circuit, and the method further comprises:
after power-on, determining, by the slave node device by using the port status detection circuit, whether a downstream port of the slave node device is floated.

10. The dynamic address initialization method for a topology network according to claim 8, wherein the method further comprises:
after the initialization request frame is sent by using the downstream port, if an initialization response frame of a corresponding downstream device skips being received within first preset duration, determining, by the slave node device, that a response of the downstream port times out, wherein
the initialization response frame is an initialization response waiting frame or an initialization response acknowledgment frame.
